**Europäisches Patentamt**

**European Patent Office**

**Office européen des brevets**

(19)

(11) Veröffentlichungsnummer: **0 285 596 B1**

(12) # EUROPÄISCHE PATENTSCHRIFT

(45) Veröffentlichungstag der Patentschrift:
27.12.91 Patentblatt 91/52

(51) Int. Cl.$^5$: **A01K 5/02**

(21) Anmeldenummer: **88890052.9**

(22) Anmeldetag: **11.03.88**

---

(54) **Verfahren zur dosierten Abgabe von Trockenfutter.**

---

Die Akte enthält technische Angaben, die nach dem Eingang der Anmeldung eingereicht wurden und die nicht in dieser Patentschrift enthalten sind.

(30) Priorität: **12.03.87 AT 582/87**
**23.02.88 AT 426/88**

(43) Veröffentlichungstag der Anmeldung:
**05.10.88 Patentblatt 88/40**

(45) Bekanntmachung des Hinweises auf die Patenterteilung:
**27.12.91 Patentblatt 91/52**

(84) Benannte Vertragsstaaten:
**CH DE FR LI NL**

(56) Entgegenhaltungen:
**DE-A- 2 633 522**
**DE-A- 3 321 731**
**DE-A- 3 602 048**

(73) Patentinhaber: **Vogl, Gerhard, Dipl.-Ing.**
**Güttlfeld 153**
**A-4070 Eferding (AT)**

(72) Erfinder: **Vogl, Gerhard, Dipl.-Ing.**
**Güttlfeld 153**
**A-4070 Eferding (AT)**

(74) Vertreter: **Hübscher, Heiner, Dipl.-Ing. et al**
**Spittelwiese 7**
**A-4020 Linz (AT)**

---

## Beschreibung

Die Erfindung betrifft ein Verfahren zur dosierten Abgabe von Trockenfutter nach dem Oberbegriff der Patentansprüche 1 und 2.

Bei der automatischen Abgabe von Trockenfutter nach einem derartigen Verfahren muß oft eine große Anzahl von Abgabestellen mit Hilfe eines einzigen Förderers beschickt werden, wobei eine möglichst genaue Dosierung an den einzelnen Abgabestellen erwünscht ist, um im Bedarfsfall die Zuteilung auch verschiedener Futterrationen an den einzelnen Abgabestellen zu ermöglichen, eine ausreichende Futterzuteilung zu gewährleisten, aber eine Futterverschwendung durch Überdosierung zu vermeiden. Eine weitere Forderung besteht darin, die Futterzuteilung auf vorgegebene Futterzeiten abzustellen, was sowohl aus Organisationsgründen als auch zur Erzielung eines geregelten Ablaufes des Stallbetriebes erwünscht ist. Schließlich ist zu fordern, daß der Anlagenaufwand pro Abgabestelle in vernünftigen Grenzen gehalten wird.

Die aufgezeigten Bedingungen können mit den bekannten Verfahren und den dabei verwendeten Vorrichtungen jeweils nur zum Teil erfüllt werden.

Aus der DE-A-2633522 ist ein Verfahren zur Abgabe von Flüssig- oder Trockenfutter bekannt, bei dem entlang eines Längsförderers Einzelauslässe vorgesehen sind und der Vorratsbehälter mit einer Wiegeeinrichtung ausgestattet wird, wobei durch Handbetätigung von Auslässen an den Abgabestellen eine Futterentnahme erfolgt und mit Hilfe der Wiegeeinrichtung jeweils die während der Öffnung eines Auslasses in die Leitung abgegebe Futtermenge auf einer Anzeigetafel angezeigt wird. Die Bedienungsperson hat die Aufgabe, die Anzeigetafel zu beobachten und die Ausgabeeinrichtung an der jeweiligen Abgabestelle nach Erreichen eines Sollwertes von Hand aus zu schließen. Hier hängt die Dosiergenauigkeit von der Genauigkeit der Bedienungsperson und dem Füllungszustand des Förderers bis zur jeweiligen Abgabestelle ab. Bei dieser händischen Dosierung läßt sich am Ende eines Austeilzyklus aus dem verbleibenden Futterrest im Vorratsbehälter die Summe der aufgetretenen Dosierfehler feststellen, wobei man die Möglichkeit hat, empirisch für den nächsten Austeilzyklus Änderungen der Soll-Abgabemengen vorzuwählen, um mit der vorbereiteten Futtermenge das Auslangen zu finden. Eine genaue Dosierung ist aber nicht möglich.

Es ist nun zwar bei der Trockenfutterabgabe denkbar, jedem Auslaß eine eigene Wiegevorrichtung mit nachgeordnetem Zwischenvorratsbehälter zuzuordnen, doch wird dadurch der Anlagenaufwand zu groß. Es wurde deshalb in der DE-A-3035476 ein anderes Austeilverfahren vorgeschlagen, bei dem einem Vorratsbehälter den einzelnen Abgabestellen zugeordneten Futterportionen entnommen und auf einer Wiegevorrichtung abgewogen werden, wonach diese Portionen einzeln mittels eines Förderers zu Vorratsbehältern an den einzelnen Abgabestellen transportiert werden. Wenn alle den einzelnen Abgabestellen zugeordneten Vorratsbehälter die zugeteilten Futterportionen empfangen haben, werden die Vorratsbehälter zur gemeinsamen Fütterung geöffnet, so daß sie ihren Futtervorrat an die jeweilige Abgabestelle abgeben. Hier ergibt sich ein beträchtlicher Zeitaufwand für die Einzeldosierung bei langen Leerlaufzeiten des Förderers, da dieser nach jedem Wiegevorgang jeweils nur eine Einzelportion bis zum Vorratsbehälter der vorbestimmten Abgabestelle transportiert, für jede Einzelabgabe also vollständig entleert wird. Wegen der zusätzlich notwendigen Vorratsbehälter an den Abgabestellen, der zusätzlichen Absperrorgane an den Vorratsbehältern und der für sie benötigten Steuerung wird der gesamte Anlagenaufwand sehr groß.

Für die genaue Dosierung und Abgabe von Flüssig-Mischfutter ist aus der DE-A-3602048 ein Verfahren bekannt, bei dem ebenfalls die im Oberbegriff der Patentansprüche 1 und 2 angeführten Verfahrensschritte eingesetzt werden. Hier wird eine Automatisierung der Abgabe unter fortlaufender Korrektur der tatsächlichen Werte der Abgabemengen dadurch erreicht, daß nach Vorbereitung eines Flüssig-Mischfuttervorrates im Vorratsbehälter der Ringförderer eingeschaltet und die Gewichtsabnahme am Vorratsbehälter laufend mittels der Wiegevorrichtung überwacht wird, wobei die den einzelnen Abgabestellen zugeordneten Auslässe mittels einer zentralen, einen Rechner enthaltenden Steuereinheit nacheinander geöffnet werden. Für das Abgabegewicht des Futters an jedem Auslaß sind in einem Speicher Sollwerte festgelegt. Ist an einer Abgabestelle der Sollwert des Abgabegewichtes erreicht, wird der zugehörige Auslaß geschlossen, wobei durch eine neuerliche Wiegung bei stillgesetztem Förderer der Istwert der tatsächlichen Abgabemenge ermittelt sowie mittels des Rechners aus dem Soll-Istwertvergleich ein Vorhaltewert bestimmt wird, um den die Soll-Abgabemenge für die jeweilige Abgabestelle für den nächsten Fütterungsvorgang korrigiert wird. Dieser Vorhaltewert wird gespeichert. Es kann auch der Gesamtdosierfehler aus der Summe der Einzeldosierfehler ermittelt werden. Bei Flüssigfütterungsanlagen liegt das Flüssig-Mischfutter in weitgehend homogener Zusammensetzung vor und wird durch eine Rohrleitung mit Hilfe eines geeigneten Förderers als kontinuierlicher Strang gefördert, wobei sich in der Praxis keine Änderungen des Füllungsgrades der Leitung (also keine größeren Lufteinschlüsse) und auch praktisch keine merkbaren Änderungen des tatsächlichen Füllgewichtes des vollgefüllten Förderers ergeben. Demgegenüber werden für die Abgabe von Trockenfutter Förderer verschiedenster Art verwendet, bei denen beim Förderbetrieb abhängig von der Art des verwendeten Förderers und von der Struktur des jeweils ausgeteilten Trockenfutters bzw. der entsprechenden Trockenfuttermischungen stark unterschiedliche Füllungsgrade und Füllgewichte des Förderers auftreten können. Aus diesem Grunde ist das für Flüssigfutter bekannte, korrigierte Austeilverfahren für die genau dosierte Abgabe von Trockenfutter nicht geeignet.

Aufgabe der Erfindung ist es, ein Verfahren anzugeben, das die Forderung nach rascher und rationeller Abgabe des Trockenfutters an den einzelnen Abgabestellen erfüllt und dabei eine hinreichend genaue Bestimmung der Dosierung zuläßt. Eine weitere Aufgabe der Erfindung ist es, ein an sich in seinen Grundzügen für die Flüssigfütterung bekanntes Verfahren für die bei der Trockenfütterung herrschenden Bedingungen zu modifizieren, so daß es auch bei ungünstiger Beschaffenheit, insbesondere wechselnder Konsistenz, Körnigkeit, verschiedenem Rieselverhalten des jeweils eingesetzten Futters, bei aufgrund ihres Aufbaues besonders bei verschiedenen Futtersorten ein unterschiedliches Förderverhalten zeigenden Förderern und bei wechselndem Schließverhalten der Auslässe ein hinreichend genaue Ausgabe des Trockenfutters ermöglicht. Eine Teilaufgabe der Erfindung besteht darin, ein Verfahren anzugeben, nach dem im Bedarfsfall mit Hilfe eines einzigen Förderers unter Verwendung einer einzigen Wiegevorrichtung verschiendenen, auswählbaren Abgabestellen entlang des Förderers auch verschiedene Futtersorten dosiert zugeführt werden können.

Die gestellte Hauptaufgabe der Erfindung wird durch die Merkmale des Patentanspruches 1 gelöst. Durch die Ermittlung des Füllgewichts des Förderers und die Erfassung des Dosierfehlers nach in den Vorratsbehälter entleerten Förderer erhält die Berechnung des bzw. der tatsächlichen Dosierfehler und damit die Korrekturen der Sollwerte für den nächsten Fütterungsvorgang eine genaue Grundlage, wobei sich wegen der wiederkehrenden Korrektur der Dosierfehler von Fütterung zu Fütterung automatisch verkleinert. Da der Dosierfehler einfach aus der Abweichung des Gewichtes der nach dem Fütterungsvorgang und Entleerung des Förderers im Vorratsbehälter befindlichen Futtermenge vom Vorgabewert für das Füllgewicht des Förderers ermittelt wird, hat die Berechnung eine einfache Grundlage. Auch die Steuerung wird, da die Öffnungszeiten selbst aufgrund von immer wieder korrgierten Speicherwerten gesteuert wird, sehr einfach. Durch die besondere Reihenfolge beim Öffnen der Abgabeauslässe ergibt sich eine Vergleichmäßigung des Füllungszustandes des Förderers und der Strömung des Futters bis zum jeweiligen, momentan in Betrieb befindlichen Auslaß. Die Futtersäule im Förderer kann bei entsprechender Abstimmung der Öffnungszeiten aufeinander bis zu dem in den Vorratsbehälter zurückführenden Auslaß, dann bis zu dem ersten geöffneten Dosierauslaß und von diesem zurück bis zum letzten zu betätigenden Auslaß zwischen dem behälterseitigen Einlaß des Förderers und dem jeweiligen Auslaß in Bewegung bleiben, wobei sich bei kontinuierlich arbeitenden Förderern in dem in Förderrichtung hinter dem Dosieraulaß befindlichen Fördererabschnitt eine gleichmäßige Füllungsdichte einstellen kann, wenn nicht extrem inhomogenes Futter transportiert wird. Es kann also das ermittelte Füllgewicht des Förderers für eine bestimmte Futtersorte als konstant angenommen werden. Bei einer Unterdosierung ist das Gewicht der nach dem Austeilvorgang und der Entleerung des Förderers im Vorratsbehälter befindlichen Futtermenge größer als das Sollfüllgewicht des Förderers. Bei einer Unterdosierung steht die im Förderer verbleibende Restfuttermenge als Ausgleich zur Verfügung, so daß auch die letzte Abgabestelle noch eine ausreichende Futtermenge erhält. Bevorzugt wird mit einer leichten Unterdosierung begonnen, so daß durch die bei aufeinanderfolgenden Fütterungsvorgängen vorgenommenen Korrekturen eine immer größere Annäherung an die tatsächlich auszuteilenden Sollmengen erreicht wird.

Der Betrieb mit automatisch arbeitenden Wiegevorrichtungen wird durch eine Ausbildung des Verfahrens gemäß Anspruch 3 vereinfacht. Dabei ist im Bedarfsfall auch die Verfütterung verschiedener Futtersorten gemäß dem Anspruch 4 möglich. Die Beschickung verschiedener Ausgabestellen mit verschiedenen Futtersorten bzw. mit verschiedenen Futtermengen erleichtert den Stallbetrieb, wenn Tiere verschiedenen Alters oder verschiedener Bestimmung (Mast- und Milchvieh) über eine gemeinsame Fütterungsanlage gefüttert werden sollen.

Das bisher beschriebene einfache Verfahren ist immer dann sinnvoll einsetzbar, wenn gewährleistet ist, daß sich ein für eine bestimmte Futtersorte gleichbleibendes Füllgewicht des Förderers und ein für diese Futtersorte auch gleichbleibender Füllungsgrad des Förderers erzielen läßt.

Bei schrittweise arbeitenden Förderern oder anderen Förderern mit ungleichförmigem Füllungsgrad sowie bei Verwendung von Futter mit sich stark innerhalb der gleichen Futtersorte ändernder Konsistenz kann man das modifizierte Verfahren nach Patentanspruch 2 einsetzen. Bei dieser Ausbildung ergibt sich eine Verlängerung eines Gesamtabgabezyklus, um die Summe der Stillsetzzeiten des Förderers, die vorgesehen werden, um eine genaue Wägung bei beruhigter Waage zu ermöglichen. Da Sollgewichtswerte vorgegeben werden, können die Öffnungszeiten der Auslässe selbst bei gleichen Sollgewichtswerten bei aufeinanderfolgenden Austeilzyklen variieren. Auftretende Ungenauigkeiten werden durch Änderung der Korrektur- bzw. Vorhaltewerte für das Sollgewicht beim nächsten Abgabevorgang ausgeglichen. Es werden Istwerte des reinen Fördererfüllgewichtes zusätzlich ermittelt, so daß die Berechnung der Abgabesollwerte eine genaue Grundlage erhält und eine sehr hohe Dosiergenauigkeit erzielt wird.

Auch bei der Verfahrensvariante nach Anspruch 2 können bei der Abwandlung des Verfahrens gemäß Anspruch 5 mit einem einzelnen Förderer ausgewählte Abgabestellen mit verschiedenen Futtersorten beschickt werden, für die jeweils abhängig vom verschiedenen spezifischen Gewicht, ihrem Rieselverhalten und ihrem sonstigen Förderverhalten die Änderungswerte des Sollgewichtes, die entsprechenden Istwerte und Korrekturwerte gesondert festgelegt und gespeichert werden. Als Förderer können Schneckenförderer, Rohrkettenförderer und sonstige Rohrförderanlagen Verwendung finden. Es ist aber auch möglich, Trogförderer, z.B. schrittweise arbeitende Schubstangenförderer oder Förderbänder mit an den Abgabestellen anstellbaren Abstreifern einzusetzen.

Zur Erhöhung des Genauigkeit kann man insbesondere bei Förderern, z.B. Rohrkettenförderern, bei denen der zurückgelegte Weg des Futters durch die Bewegung des Förderorganes genau definiert ist, gemäß Anspruch 6 vorgehen. Dabei läßt sich das Verteilungsprofil mit Hilfe eines Rechners erfassen. Beim Leergehen des Vorratsbehälters oder bei Stauungen des Futters im Förderer können Alarm- bzw. Stillsetzeinrichtungen betätigt werden.

Weitere Einzelheiten des erfindungsgemäßen Verfahrens ergeben sich aus der nachfolgenden Beschreibung von nach dem erfindungsgemäßen Verfahren arbeitenden Anlagen an Hand der Zeichnung. Es zeigen

Fig. 1 beispielsweise eine erste, nach dem erfindungsgemäßen Verfahren arbeitende Anlage im Schema und

Fig. 2 eine vereinfachte Anlage ebenfalls im Blockschema.

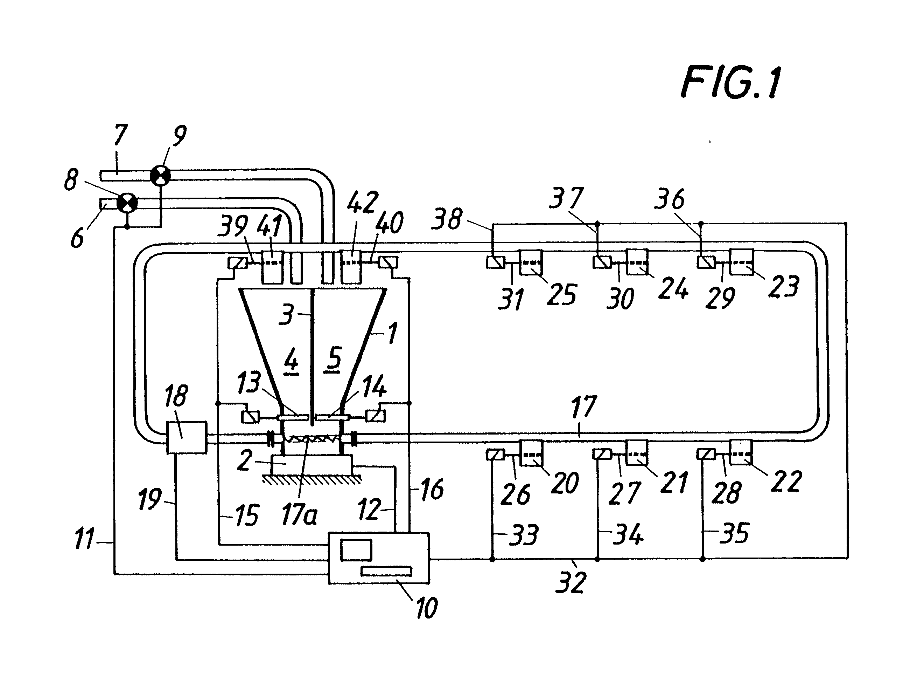

Bei der Anlage gemäß dem Beispiel nach Fig. 1 ist ein Futtervorratsbehälter 1 vorgesehen, der auf einer Wiegevorrichtung 2 abgestützt ist. Der Innenraum des Vorratsbehälters 1 ist durch eine Trennwand 3 in zwei Abteilungen 4, 5 unterteilt, die jeweils eine zumindest für einen Austeilzyklus ausreichende Trockenfuttervorratsmenge aufnehmen. Die Abteile 4 und 5 können über Leitungen 6 und 7 und Absperrorgane 8, 9 mit Futter bzw. Futterzutaten beschickt werden, wobei man mit Hilfe der Wiegevorrichtung 2 auch das Einwiegen dieser Futtervorräte bzw. bei Ausführung des Behälters 1 als Mischbehälter der verschiedenen Futterzutaten steuern kann. Zu diesem Zweck ist ein Steuercomputer 10 mit den Absperrorganen 8, 9 über eine Steuerleitung 11 verbunden und über eine Leitung 12 an die Wiegevorrichtung angeschlossen.

Die beiden Abteilungen 4, 5 des Vorratsbehälters 1 sind durch je ein Absperrorgan 13, 14 auslaßseitig abschließbar, welche Absperrorgane vom Steuercomputer 10 über Leitungen 15, 16 gesteuert werden. Beim Ausführungsbeispiel ist ein als Ringförderer ausgebildeter Rohrförderer 17 vorgesehen, der von einer Antriebseinheit 18 angetrieben wird, die ihrerseits ebenfalls vom Computer 10 über eine Leitung 19 gesteuert wird.

An den Rohrförderer 17 schließen Auslässe 20 bis 25 an, die einzelnen Abgabestellen zugeordnet sind. Jeder Auslaß 20 bis 25 enthält einen Absperrschieber 26 bis 31, der vom Computer 10 über Steuerleitungen 32 bis 38 für sich im Öffnungs- bzw. Schließsinn betätigt werden kann. Zwei weitere mit Absperrschiebern 39, 40 versehene Auslässe 41, 42 sind über den beiden Abteilungen 4, 5 des Vorratsbehälters 1 angeordnet.

Beim Beginn eines Fütterungszyklus sind die Abteilungen 4, 5 mit Futter gefüllt und es sind alle Schieber 13, 14, 26 bis 31, 39 und 40 geschlossen. Es kann vorgesehen sein, daß bei einem Fütterungszyklus die Auslässe 20, 21 und 24 mit vorbestimmten Futtermengen aus der Abteilung 4 und die Auslässe 22 und 25 mit vorbestimmten Futtermengen aus der Abteilung 5 zu beschicken sind. Der Förderer 17 ist bei Arbeitsbeginn leer. Nun wird die Antriebseinrichtung 18 eingeschaltet und der Schieber 13 geöffnet. Ebenso wird der Schieben 26 am Auslaß 20 geöffnet. Im Förderer wird somit Futter in Richtung auf den Auslaß 20 zu befördert. Die Gewichtsabnahme des Vorratsbehälters 1 aufgrund der Abgabe des Futters aus der Abteilung 4 wird mit Hilfe der Wiegevor richtung 2 erfaßt. Der Computer 10 der Steuereinheit hat einen gespeicherten Sollwert der Gewichtsabnahme des Vorratsbehälters 1, der sich aus dem angenommenen Füllgewicht des Abschnittes des Förderers 17 zwischen dem Behälter 1 und dem Auslaß 20, der für den Auslaß 20 gewünschten Abgabemenge und einem von der vorherigen Abgabe abgeleiteten und gespeicherten Korrekturwert zusammensetzt. Ist dieser Sollwert erreicht, schaltet der Computer 10 den Antrieb 18 ab und steuert die Schließung des Schiebers 26. Nach Beruhigung der Waage wird der Istwert der tatsächlichen Entnahme erfaßt und aus dem Vergleich neuer dieses Istwertes mit dem Sollwert im Computer ein neuer Korrekturwert gespeichert, der als Teilwert der Korrektur für die nächste Abgabe am Auslaß 20 Verwendung finden wird. Nun wird der Förderer 18 wieder eingeschaltet, der Schieber 27 am Auslaß 21 geöffnet und ein Sollwert vorgegeben, der sich aus dem angenommenen Füllgewicht des Förderers 17 zwischen den Auslässen 20 und 21, der gewünschten Abgabemenge am Auslaß 21 und dem erwähnten Korrekturwert berechnet. Nach Erreichen des Sollwertes wird der Antrieb 18 wieder abgestellt und der Istwert der Abgabe ermittelt, wobei im übrigen so wie im Zusammen mit dem Auslaß 20 beschrieben weiter vorgegangen wird. Die Futterzuteilung zu den anderen Auslässen, die von der Abteilung 4 aus beschickt werden sollen, erfolgt analog. Sind alle hier anzusprechenden Abgabestellen beteilt worden, werden alle Schieber 26 bis 31 geschlossen und es wird die Schieber 39 am Auslaß 41 geöffnet. Die Antriebseinrichtung 18 bleibt nun solange eingeschaltet, bis keine Gewichtsänderung mehr auftritt, da der Förderer zwischen der Entnahmestelle und dem Auslaß 41 gefüllt ist und die entnommene Futtermenge durch die am Auslaß 41 neu zugeführte Futtermenge ersetzt wird. Nun erfolgt im Computer die Berechnung des Differenzgewichtes gegenüber dem Beginn des Austeilvorganges aus der Summe der Austeilmengen plus dem gesamten Füllgewicht des Förderers. Nun wird der Schieber 13 geschlossen und der Förderer 17 wieder angetrieben, bis er vollständig in die Abteilung 4 entleert ist. Nach Beruhigung der Waage wird das Gewicht neuerlich festgestellt, wobei die Gewichtszunahme dem vollständigen Füllgewicht des Förderers entspricht. Aus den bekannten Längen der Fördererabschnitte zwischen den anzusprechenden Auslässen bzw. des ersten und letzten angesprochenen Auslasses und dem Behälter bzw. dem Auslaß 41 können nun die Teilfüllgewichte für diese Abschnitte berechnet und beim nächsten Austeilzyklus in die Berechnung der Abgabemenge einbezogen werden.

Bei dem nun entleerten Förderer 17 kann die Austeilung des Futters aus der Abteilung 5 an die hier zu beteilenden Auslässe analog zu dem im Zusammenhang zu dem vorher beschriebenen Verfahren erfolgen.

Zur Erhöhung der Genauigkeit kann bei einem Förderer, bei dem der Förderweg dem Verstellweg des Fördererganges entspricht, im Computer 10 auch ein Verteilungsprofil des Futters innerhalb des Förderers 17 ermittelt und bei der Auswertung bzw. Erstellung der Korrekturwerte berücksichtigt werden.

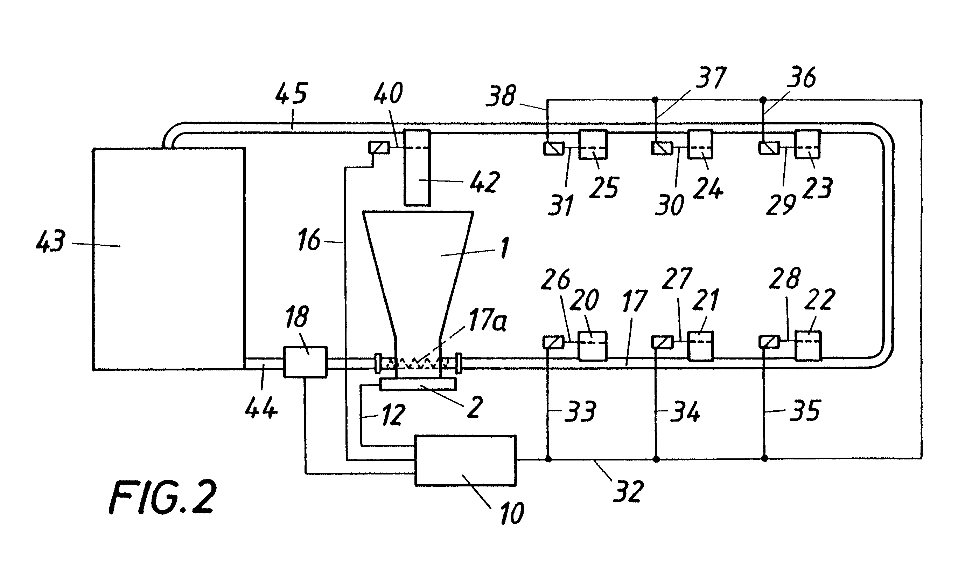

Für viele Anwendungsfälle genügt es, mit einer vereinfachten Anlage nach Fig. 2 zu arbeiten oder eine Anlage gemäß Fig. 1 nach dem nun im Zusammenhang mit Fig. 2 zu beschreibenden Verfahren zu betreiben.

In Fig. 2 wurden gleiche Teile mit gleichen Bezugszeichen wie in Fig. 1 bezeichnet. Ergänzend wurde das Förderorgan des Förderers 17 mit 17a bezeichnet. Zusätzlich wurde ein Futterspeicherbehälter 43 für eine Futtermischung dargestellt, aus dem über ein Förderrohr 44 Futter entnommen und in den Vorratsbehälter 1 gefördert bzw. über Förderrohr 44 oder eine Verlängerung 45 des Förderers 17 in ihn zurückgefördert werden kann. Es wurde nur ein in den Vorratsbehälter 1 zurückführender Endauslaß 42 des Ringförderers 17 dargestellt. Die Steuereinheit 10 kann wieder aus einem Mikrocomputer bestehen, der hier eine Zeitgebereinrichtung und Speicher für Zeitsollwerte aufweisen muß.

Zur Vorbereitung der Anlager wird zunächst der Ringförderer 17 bis zum Auslaß 42 mit Futter gefüllt und dann diese Futtermenge durch Öffnen des Schiebers 40 in den Vorratsbehälter entleert, wodurch das Füllgewicht des Ringförderers 17 mittels der Wiegevorrichtung 2 ermittelt wird. Nun wird im Steuereinheit 10 das gewünschte Abgabegewicht für die Futtermengen an den einzelnen Auslässen 20 bis 25 eingegeben, wobei diese Abgabemengen unterschiedliche Größen aufweisen können. Als nächster Schritt wird der Vorratsbehälter 1 vom Speicherbehälter 43 mit einer Futtermenge beschickt, deren durch die Waage 2 festgestelltes, von der Steuereinheit 10 errechnetes Gewicht dem Füllgewicht des Förderers 17 und der Summe der Abgabemengen entspricht. Die Steuereinheit 10 berechnet aus den Sollabgabemengen und den bekannten Durchlaßmengen der Auslässe 20 bis 25 bei geöffneten Schiebern 26 bis 31 Dosier-Öffnungszeiten für diese Auslässe 20 bis 25.

Nach Vorbereitung der Futtermenge im Vorratsbehälter 1 wird der Ringförderer 18 durch Einschalten seines Antriebsteiles 18 mittels der Mikrocomputers 10 wieder gefüllt, wobei die vollständige Füllung daraus festgestellt werden kann, daß nach Öffnen des Auslasses 42 keine Gewichtsänderung des Futters im Vorratsbehälter 1 mehr stattfindet, weil die Waage 2 nur mehr die Gesamtsollabgabemenge anzeigt bzw. keine Änderung der Waageanzeige mehr stattfindet, da die vom Förderer 17a entnommene Futtermenge die über 42 rückströmende Futtermenge ersetzt. Die Steuereinheit 10 steuert nun den Schieber 40 am Auslaß 42 auf "Schließen" und öffnet den dem Auslaß 42 nächstliegenden Abgabeauslaß 25 durch Betätigung des Schiebers 31 für die für diesen errechnete Dosierzeitspanne. Nach Verstreichen dieser Zeitspanne wird der Auslaß 25 geschlossen und der Einlaß 24 geöffnet und so fort bis zum Auslaß 20. Die Futtersäule im Förderer 17 befindet sich jeweils bis zu dem geöffneten Auslaß in Bewegung und der Förderer 17 ist in dem zwischen dem geöffneten Auslaß und dem Auslaß 42 liegenden Bereich mit Futter gefüllt. Nach der Futterabgabe am Auslaß 20 und dem darauffolgenden Schließen des Auslasses 20 über den Schieber 26 wird der Ringförderer 17 über den Auslaß 42 in den Vorratsbehälter 1 entleert und es wird der mittlere Dosierfehler aus der Abweichung des Gewichtes des nun im Vorratsbehälter 1 befindlichen Futters vom Soll-Füllgewicht des Förderers 17 ermittelt. Aus diesem Dosierfehler errechnet der Mikrocomputer 10 einen Korrekturwert, mit dem die gespeicherten Öffnungzeiten für die Auslässe 20 bis 25 beim nächsten Fütterungszyklus, beispielsweise durch Multiplikation mit einem Korrekturfaktor korrigiert werden. Nach Speichern des Korrekturwertes wird der Vorratsbehälter 1 in den Speicherbehälter 43 entleert.

Auch hier können mehrere Speicherbehälter für verschiedene Futtersorten vorgesehen werden, wobei man bei einem Fütterungszyklus jeweils die vorprogrammierten Auslässe mit dem aus dem jeweiligen Speicherbehälter in entsprechender Menge entnommenem Futter beschickt.

Bei entsprechender Ausgestaltung der Steuereinrichtung 10 kann man das Programm wechseln, also die Anlage nach Anspruch 1 nach dem im Zusammenhang mit der Fig. 2 beschriebenen Verfahren betreiben und umgekehrt. Bei annähernd homogenem Futter ist die im Zusammenhang mit Fig. 2 beschriebene Verfahrensvariante wegen der Einfachheit vorzuziehen, wogegen die im Zusammenhang mit Fig. 1 beschriebene Verfahrensvariante auch bei nicht ganz gleichmäßiger Futterförderung und inhomogenem Futter noch hohe Dosiergenauigkeiten ergibt.

## Patentansprüche

1. Verfahren zur dosierten Abgabe von Trockenfutter aus einem Vorratsbehälter (1) mit Hilfe eines gemeinsamen Ringförderers (17) der wenigstens einen in den Vorratsbehälter (1) zurückführenden Auslaß (42) aufweist, an mehrere mit Längsabständen voneinander entlang des Förderers angeordnete Abgabestellen, die einzeln freigebbare Auslässe (20 bis 25) aufweisen, wobei die Einzeldosierung nach gespeicherten Sollwerten durch Steuerung der Öffnung der Auslässe (20 bis 25) bestimmt und die Sollwerte der Einzeldosierung für den nächsten Fütterungsvorgang aufgrund des mittels einer Wiegevorrichtung (2) am Vorratsbehälter (1) ermittelten Abgabegewichtes beim momentanen Fütterungsvorgang durch Vorhaltewerte korrigiert werden, dadurch gekennzeichnet, daß nacheinander folgende Verfahrensschritte ausgeführt werden :

— das Füllgewicht des Ringförderers (17) wird vorab bei geschlossenen Auslässen (20 bis 25) an den Abgabestellen durch Füllung und anschließende Entleerung des Ringförderers (17) mit dem auszuteilenden Futter ermittelt ;

— für Jeden Austeilvorgang wird bei entleertem Ringförderer (17) im Vorratsbehälter (1) unter Einsatz einer Steuereinrichtung (10) und der Wiegevorrichtung (2) ein Futtervorrat vorbereitet, dessen Gewicht der Summe aus dem vorab ermittelten Füllgewicht des Ringförderers (17) und den durch die gespeicherten Sollwerte vorbestimmten Abgabegewichten an den einzelnen Abgabestellen entspricht ;

— der Ringförderer (17) wird in Betrieb gesetzt und gefüllt ;

— die Auslässe (20 bis 25) an den Abgabestellen werden über die Steuereinrichtung (10) einzeln und nacheinander beginnend von dem in den Vorratsbehälter (1) zurückführenden Auslaß (42) nächstliegenden Abgabeauslaß der Reihe nach für den einzelnen Abgabestellen zugeordnet vorgespeicherten, die Einzeldosierung bestimmenden Sollzeiten entsprechende Zeitspannen für die Abgabe von Abgabemengen geöffnet ;

— nach der Futterabgabe an allen Abgabestellen wird der Ringförderer (17) in den Vorratsbehälter (1) entleert und das Gewicht des nun im Vorratsbehälter (1) enthaltenen Futters ermittelt ;

— die Abweichung des Gewichtes der im Vorratsbehälter (1) enthaltenen Futtermenge vom Fördererfüllgewicht wird festgestellt und aus der Abweichung wird ein Korrekturfaktor berechnet, um den die Speicherwerte für die Sollzeiten der Einzeldosierung für den nächsten Fütterungsvorgang korrigiert werden.

2. Verfahren zur dosierten Abgabe von Trockenfutter aus einem Vorratsbehälter (1) mit Hilfe eines gemeinsamen Ringförderers (17), der wenigstens einen in den Vorratsbehälter (1) zurückführenden Auslaß (42) aufweist, an mehrere mit Längsabständen voneinander entlang des Ringförderers (17) angeordnete Abgabestellen, die einzeln freigebbare Auslässe (20 bis 25) aufweisen, wobei die Einzeldosierung nach gespeicherten Sollwerten durch Steuerung der Öffnung der Auslässe (20 bis 25) bestimmt und die Sollwerte der Einzeldosierung für den nächsten Fütterungsvorgang aufgrund des mittels einer Wiegevorrichtung (2) am Vorratsbehälter (1) ermittelten Istwertes des Abgabegewichtes durch Vorhaltewerte korrigiert werden, dadurch gekennzeichnet, daß nacheinander folgende Verfahrensschritte ausgeführt werden :

— bei entleertem Ringförderer (17) wird im Vorratsbehälter (1) ein Futtervorrat vorbereitet, dessen Gewicht wenigstens der Summe aus einem (angenommenen) Wert für das Füllgewicht des Ringförderers und den durch die gespeicherten Sollwerte vorbestimmten Einzelabgabemengen entspricht ;

— das Gewicht des Futtervorrates wird gespeichert ;

— für den Austeilvorgang wird mit der Förderung des Futters in den leeren Ringförderer (17) begonnen und die Gewichtsänderung des Vorratsbehälters (1) wird laufend überwacht ;

— die Auslässe (20 bis 25) an den Abgabestellen werden in der durch ihren zunehmenden Abstand vom Vorratsbehälter (1) bestimmten Reihenfolge geöffnet, wobei für Jede Abgabestelle eine Sollgewichtsabnahme des Vorratsbehälters (1) als Summe des Teilfüllgewichtes des Ringförderers (17) zwischen dem Vorratsbehälter (1) und der ersten Abgabestelle (20) bzw. des Füllgewichtes des Förderers zwischen der letzten angesteuerten Abgabestelle, dem Gewicht der gewünschten, abzugebenden Futtermenge und aus einem Korrekturwert errechnet wird ;

— beim Erreichen des jeweiligen Sollwertes der Gewichtsabnahme an Jeder Abgabestelle wird der Ringförderer (17) stillgesetzt, der bis dahin geöffnete Auslaß (20 bis 25) geschlossen und das Istgewicht des Vorratsbehälters (1) mit dem Restfuttervorrat mittels der Wiegevorrichtung (2) ermittelt ;

— mit Hilfe eines Rechners der Steuereinrichtung (10) wird aus dem Soll-Ist-Wertvergleich ein Vorhaltewert für den nächsten Abgabevorgang am gleichen Auslaß (20 bis 25) als Teil des Korrekturwertes für den nächsten Abgabevorgang ermittelt und gespeichert ;

— nach der Futterabgabe an allen zu beschickenden Auslässen (20 bis 25) wird das vollständige Füllgewicht des Ringförderers (17) bei geschlossenen Auslässen (20 bis 25) an den Abgabestellen durch Füllung und anschließende Entleerung des Ringförderers ermittelt ;

— die Teilfüllgewichte des Förderers bis zu den einzelnen Auslässen (20 bis 25) werden für die Dosierung beim nächsten Austeilvorgang aus dem ermittelten Füllgewicht ermittelt und im Bedarfsfall wird das ermittelte Füllgewicht bei der Bildung der Korrekturwerte eingesetzt.

3. Verfahren nach Patentanspruch 1, dadurch gekennzeichnet, daß der Vorratsbehälter (1) nach Ermittlung des Korrekturfaktors vollständig in einen Speicherbehälter (43) entleert und für den nächsten Fütterungsvorgang wieder mit dem das dem Vorgabewert für das Füllgewicht des Förderers (17) und den vorbestimmten Abgabemengen an den Auslässen entsprechende Gewicht aufweisenden Futtervorrat befüllt wird.

4. Verfahren nach Patentansprüche 1 und 3, dadurch gekennzeichnet, daß zwei oder mehrere Speicherbehälter (4, 5) für verschiedene Trockenfuttersorten bzw. -mischungen vorgesehen und mit Hilfe des Ringförderers (17) in verschiedenen Austeilzyklen dafür ausgewählte Abgabestellen mit verschiedenen Futtersorten beschickt werden, wobei jeweils ein den Abgabemengen an den zu beschickenden Auslässen (20 bis 25) und dem Vorgabewert des Füllgewichtes des Förderers mit dieser Futtersorte entsprechender Futtervorrat im Speicherbehälter (4 bzw. 5) dieses Vorratsbehälters (1) vorbereitet und anschließend ausgeteilt wird.

5. Verfahren nach Patentanspruch 2, dadurch gekennzeichnet, daß mit Hilfe des Ringförderers (17) in verschiedenen Austeilzyklen dafür ausgewählte Abgabestellen aus verschiedenen Abteilungen (4, 5) des Vorratsbehälters (1) mit verschiedenen Futtersorten beschickt werden, für die jeweils die Änderungswerte des Sollgewichtes, die entsprechenden Istwerte und die Korrekturwerte gesondert festgelegt und gespeichert werden.

6. Verfahren nach Patentanspruch 2, dadurch gekennzeichnet, daß während der Futterabgabe aus dem Förderweg und dem Gewicht der an gewählte Teilstreckeninkremente des Förderweges im Förderer (17) abgegebenen Teilmengen des Futters ein Verteilungsprofil des geförderten Futters über die Länge des jeweiligen Förderabschnittes mittels der Wiegevorrichtung (2) und der Steuereinrichtung (10) erfaßt und bei der Bildung des Sollwertes für das Füllgewicht des Förderers berücksichtigt wird.

## Claims

1. A process for a metered delivery of dry feed from a supply bin (1) by means of a common conveyor (17), which has at least one outlet (42), which leads back into the supply bin (1), which conveyor delivers the feed to a plurality of delivery stations, which are longitudinally spaced apart along the conveyor and are provided with individually openable outlets (20 to 25), wherein the individual doses are determined in dependence on stored desired values by a control of the opening of the outlets (20 to 25) and the desired values for the individual doses for the next feeding operation are corrected by set values derived from the weight which has been delivered during the current feeding operation and determined by means of a weighing device (2) provided at the supply bin (1), characterized in that the following proces steps are carried out in succession :

— the weight of the charge on the annular conveyor (17) is determined first when the outlets (20 to 25) at the delivery stations are opened in that the annular conveyor (17) is charged with the feed to be distributed and is subsequently emptied ;

— when the annular conveyor (17) is empty each distributing operation is prepared in that a supply of feed is provided in the supply bin (1) by means of a control device (10) and the weighing device (2) in a weight which equals the sum of the previously determined weight of the charge on the annular conveyor (17) and the weights of the predetermined amounts to be delivered at the several delivery stations in accordance with the stored desired values ;

— the annular conveyor (17) is started and filled;

— the outlets (20 to 25) at the delivery stations are individually opened by the control device (10), in succession, beginning with the delivery outlet which is nearest to the outlet (42) that leads back to the supply bin (1), for a delivery of feed for periods of the which for each delivery outlet correspond to a desired time determining the individual dose ;

— after feed has been delivered at all delivery stations the annular conveyor (17) is emptied into the supply bin (1) and the weight of the feed contained in the supply bin (1) is determined ;

— the difference between the weight of the feed contained in the supply bin (1) and the weight of the charge on the conveyor is determined and is used for a computation of a correcting factor, by which the stored values for the desired times for the individual doses for the next feeding operation are corrected.

2. A process for a metered delivery of dry feed from a supply bin (1) by means of a common annular conveyor (17), which has at least one outlet (42), which leads back into the supply bin (1), which conveyor delivers the feed to a plurality of delivery stations, which are longitudinally spaced apart along the conveyor and are provided with individually openable outlets (20 to 25), wherein the individual doses are determined in dependence on stored desired values by a control of the opening of the outlets (20 to 25) and the desired values for the individual doses for the next feeding operation are corrected by set values derived from the weight which has been delivered during the current feeding operation and determined by means of a weighing device (2) provided at the supply bin (1), characterized in that the following process steps are carried out in succession :

— when the annular conveyor (17) is emptied, feed is provided in the supply bin (1) in an amount having a weight which is at least as large as the sum of an (assumed) value for the weight of the charge on the annular conveyor and individual delivered amounts which are predetermined by the stored desired values ;

— the weight of the supply of feed is stored ;

— for the distributing operation the feeding of feed into the empty annular conveyor (17) is initiated and the change of the weight of the supply bin (1) is continuously monitored ;

— the outlets (20 to 25) at the delivery stations are opened in the order corresponding to their increasing distances from the supply bin (1) and for each delivery station a desired weight decrease of the supply bin (1) is calculated as the sum of the weight of the partial charge on the annular conveyor (17) between the supply bin (1) and the first delivery station (20) or the weight of the charge on the conveyor between the last delivery station at which feed has been delivered, the weight of the desired amount of feed to be delivered, and a correcting value ;

— When the weight decrease at has reached the desired value for each delivery station the annular conveyor (17) is stopped, the previously open outlet (20 to 25) is closed, and the actual weight of the supply bin (1), which contains the remaining feed supply, is determined by the weighing device (2) ;

— by means of a computer of the control device (10) a set value for the next delivering operation to be performed at the same outlet (20 to 25) is determined and stored as a part of the correcting value for the next delivering operation ;

— after a delivery of feed at all outlets (20 to 25) to be supplied, the weight of the charge on the annular conveyor (17) is determined in that the annular conveyor is filled and subsequently emptied while the outlets (20 to 25) at the delivery stations are closed ;

— the weights of the partial charges on the conveyor as far as to each of the outlets (20 to 25) are determined for the metering during the next distributing operation from the charge weight which has been determined and the charge weight which has been determined is used in forming the correcting values in case of need.

3. A process according to claim 1, characterized in that when the correcting factor has been determined the supply bin (1) is entirely emptied into a storage bin (43) and for the next feeding operation is again filled with feed in an amount which has a weight that corresponds to the set value for the weight of the charge on the conveyor (17) and the predetermined amounts to be delivered at the outlets.

4. A process according to claims 1 and 2, characterized in that two or more storage bins (4, 5) are provided for different kinds of dry feed or dry feed mixes, selected delivery stations are supplied by means of the annular conveyor (17) with different kinds of feed in different distributing cycles, and a supply of feed corresponding to the amounts to be delivered at the outlets (20 to 25) which are to be supplied and to the predetermined value of the weight of the charge on the conveyor for that kind of feed is provided in the storage bin (4 or 5) associated with that supply bin (1) and is subsequently distributed.

5. A process according to claim 2, characterized in that in various distributing cycles delivery stations selected for such cycles are supplied by means of the annular conveyor (17) with different kinds of feed from different compartments (4, 5) of the supply bin (1) and values of the change of the desired weight, the corresponding actual values and the correcting values for each of said kinds of feed are separately determined and stored.

6. A process according to claim 2, characterized in that a distribution profile of the feed being supplied over the length of the respective section of the conveyor is determined by means of the weighing device (2) and the controller (10) during the delivery of feed in dependence on the length of the path of conveyance and the weight of the partial amounts of feed supplied to selected increments of the path of conveyance in the conveyor (17) and is taken into account in the determination of the desired value of the weight of the charge on the conveyor.

## Revendications

1. Procédé pour distribuer de façon dosée un aliment sec pour animaux depuis un réservoir (1) à l'aide d'un transporteur commun (17) en circuit fermé qui présente au moins une sortie (42) renvoyant au réservoir (1), en plusieurs points de distribution disposés le long du transporteur, à des espacements longitudinaux mutuels, et qui présentent des sorties (20 à 25) pouvant être ouvertes individuellement, le dosage individuel étant déterminé en fonction de valeurs de consigne mémorisées, par la commande de l'ouverture des sorties (20 à 25), et les valeurs de consigne du dosage individuel pour l'opération d'alimentation suivante étant corrigées par des valeurs de retenue, au moment de l'opération d'alimentation instantanée, sur la base d'un poids à distribuer qui est mesuré sur le réservoir (1) à l'aide d'un dispositif de pesée (2), caractérisé en ce que les étapes ci-après du procédé sont exécutées l'une après l'autre :

— on mesure préalablement le poids de remplissage du transporteur (17) en circuit fermé alors que les sorties (20 à 25) des points de distribution sont fermées, en remplissant le transporteur en circuit fermé (17) de l'aliment pour animaux à distribuer et en le vidant ensuite ;

— pour chaque opération de distribution, on prépare dans le réservoir (1), alors que le transporteur en circuit fermé (17) est vidé et en utilisant un dispositif de commande (10) et le dispositif de pesée (2), une réserve d'aliment pour animaux dont le poids correspond à la somme du poids de remplissage du transporteur en circuit fermé (17) qui a été préalablement mesuré, et des poids à distribuer prédéterminés, aux différents points de distribution, par les valeurs de consigne mémorisées ;

— on met le transporteur en circuit fermé (17) en marche et on le remplit ;

— on ouvre individuellement et successivement les sorties (20 à 25) des points de distribution à l'aide du dispositif de commande (10), en commençant par la sortie de distribution la plus proche de la sortie (42) qui renvoie au réservoir, et dans l'ordre, pendant des laps de temps préalablement mémorisés, associés aux différents points de distribution, et qui correspondent aux valeurs de consigne qui déterminent le dosage individuel, pour délivrer les quantités à distribuer;

— lorsque la délivrance de l'aliment pour animaux a été exécutée en tous les points de distribution, on vide le transporteur en circuit fermé (17) dans le réservoir (1) et on mesure le poids de l'aliment pour animaux qui est maintenant contenu dans le réservoir (1) ;

— on constate l'écart entre le poids de la quantité d'aliment pour animaux contenue dans le réservoir (1) et le poids de remplissage du transporteur et, sur la base de cet écart, on calcule un facteur de correction pour corriger les valeurs mémorisées pour les temps de consigne du dosage individuel pour l'opération d'alimentation suivante.

2. Procédé pour distribuer de façon dosée un aliment sec pour animaux depuis un réservoir (1) à l'aide d'un transporteur commun (17) en circuit fermé qui présente au moins une sortie (42) renvoyant au réservoir (1), en plusieurs points de distribution disposés le long du transporteur en circuit fermé (17), à des espacements longitudinaux mutuels, et qui présentent des sorties (20 à 25) pouvant être ouvertes individuellement, le dosage individuel étant déterminé en fonction de valeurs de consigne mémorisées, par la commande de l'ouverture des sorties (20 à 25), et les valeurs de consigne du dosage individuel pour l'opération d'alimentation suivante étant corrigées par des valeurs de retenue, sur la base de la valeur réelle du poids à distribuer qui est mesurée sur le réservoir (1) à l'aide d'un dispositif de pesée (2), caractérisé en ce que les étapes ci-après du procédé sont exécutées l'une après l'autre :

— alors que le distributeur en circuit fermé (17) est vidé, on prépare dans le réservoir (1) une réserve d'aliment pour animaux dont le poids correspond au moins à la somme d'une valeur (supposée) du poids de remplissage du transporteur en circuit fermé et des quantités individuelles à distribuer qui sont prédéterminées par les valeurs de consigne mémorisées ;

— on mémorise le poids de la réserve d'aliment pour animaux ;

— pour l'opération de répartition, on commence par envoyer l'aliment pour animaux dans le transporteur en circuit fermé (17) vide et on surveille continuellement la variation du poids du réservoir (1) ;

— on ouvre les sorties (20 à 25) des points de distribution, dans l'ordre croissant des espaces qui les séparent du réservoir (1), et on calcule pour chaque point de distribution, une valeur de consigne de la diminution du poids du réservoir (1) constituée par la somme du poids de remplissage partiel du transporteur en circuit fermé (17) compris entre le réservoir (1) et le premier point de distribution (1), ou le poids de remplissage du transporteur entre le point de distribution commandé en dernier, du poids de la quantité d'aliment pour animaux désirée à délivrer, et d'une valeur de correction ;

— lorsqu'on a atteint la valeur de consigne de la diminution du poids à chaque point de distribution, on met à l'arrêt le transporteur en circuit fermé (17), on ferme la sortie (20 à 25) ouverte jusque là et on mesure le poids réel du réservoir (1) avec la réserve restante d'aliment pour animaux au moyen du dispositif de pesée (2) ;

— à l'aide d'un ordinateur appartenant au dispositif de commande (10), on détermine, sur la base de la comparaison entre la valeur de consigne et la valeur réelle, une valeur de retenue pour l'opération suivante de distribution à effectuer à la même sortie (20 à 25), pour constituer une partie de la valeur de correction pour l'opération de distribution suivante et on la mémorise ;

— lorsque toutes les sorties (20 à 25) à alimenter ont délivré leur aliment pour animaux, on mesure le poids de remplissage complet du transporteur en circuit fermé (17), alors que les sorties (20 à 25) des points de distribution sont fermées, en remplissant le transporteur en circuit fermé et en le vidant ensuite ;

— on détermine les poids de remplissage partiel du transporteur jusqu'aux diverses sorties (20 à 25) pour le dosage à obtenir lors de l'opération de distribution, suivante, en se basant sur le poids de remplissage mesuré et, en cas de besoin, on utilise le poids de remplissage mesuré pour la formation des valeurs de correction.

3. Procédé selon la revendication 1, caractérisé en ce qu'après avoir déterminé le facteur de correction, on vide entièrement le réservoir (1) dans un récipient de réserve (43) et, pour l'opération d'alimentation suivante, on le remplit à nouveau avec la réserve d'aliment pour animaux présentant le poids qui correspond à la valeur spécifiée pour le poids de remplissage du transporteur (17) et aux quantités prédéterminées à distribuer aux différentes sorties.

4. Procédé selon les revendications 1 et 3, caractérisé en ce qu'il est prévu deux ou plus de deux récipients de réserve (4, 5) contenant plusieurs sortes ou mélanges différents d'aliment sec pour animaux, et en ce qu'à l'aide du transporteur en circuit fermé (17), et dans différents cycles de distribution, on alimente les points de distribution sélectionnés pour ces cycles avec différentes sortes d'aliments pour animaux, une réserve d'aliment pour animaux correspondant aux quantités à distribuer aux sorties (20 à 25) à alimenter et à la valeur spécifiée du poids de remplissage du transporteur dans le cas de cette sorte d'aliment pour animaux étant préparée dans le récipient de réserve (4 ou 5) de ce réservoir (1) et étant ensuite distribuée.

5. Procédé selon la revendication 2, caractérisé en ce qu'à l'aide du transporteur en circuit fermé (17) et dans différents cycles de distribution, on alimente les points de distribution sélectionnés pour ces cycles avec différentes sortes d'aliments pour animaux à partir de différents compartiments (4, 5) du réservoir (1), les valeurs de la variation du poids de consigne, les valeurs réelles correspondantes et les valeurs de correction étant établies et mémorisées séparément pour chaque sorte d'aliment pour animaux.

6. Procédé selon la revendication 2, caractérisé en ce que, pendant la distribution d'aliment pour animaux sur la base de la distance de transport et du poids des quantités partielles d'aliment pour animaux qui sont distribuées en des incréments partiels sélectionnés de la distance de transport du transporteur, on forme un profil de distribution de l'aliment pour animaux transporté sur la longueur du segment de transport considéré, à l'aide du dispositif de pesée (2) et du dispositif de commande (10), et on tient compte de ce profil pour la formation de la valeur de consigne utilisée pour le poids de remplissage du transporteur.

FIG.1

EP 0 285 596 B1

FIG.2

EP 0 285 596 B1